(19) Europäisches Patentamt / European Patent Office / Office européen des brevets

(11) **EP 4 224 501 A1**

(12) **EUROPEAN PATENT APPLICATION**
published in accordance with Art. 153(4) EPC

(43) Date of publication:
**09.08.2023 Bulletin 2023/32**

(21) Application number: **21874982.8**

(22) Date of filing: **24.08.2021**

(51) International Patent Classification (IPC):
**H01G 11/32** (2013.01)　　**H01G 11/60** (2013.01)
**H01G 11/62** (2013.01)

(52) Cooperative Patent Classification (CPC):
**H01G 11/34; H01G 11/38; H01G 11/60;**
**H01G 11/62; Y02E 60/13**

(86) International application number:
**PCT/JP2021/030971**

(87) International publication number:
**WO 2022/070679 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020　JP 2020163601**

(71) Applicant: **Nippon Chemi-Con Corporation Tokyo 141-8605 (JP)**

(72) Inventors:
- **KIMURA, Toshiki Tokyo 141-8605 (JP)**
- **TSUMEDA, Satoru Tokyo 141-8605 (JP)**

(74) Representative: **AWA Sweden AB Junkersgatan 1 582 35 Linköping (SE)**

(54) **ELECTRICAL DOUBLE LAYER CAPACITOR**

(57)　An electric double layer capacitor that can suppress the generation of gas and achieve long lifetime is provided. A positive electrode and a negative electrode have a polarizable electrode layer including activated carbon, and electrolytic solution includes an aprotic solvent and quaternary ammonium salt. A value of an index D of this electric double layer capacitor calculated by the below formula using an amount W (meq/g) of total acidic surface functional group per a unit weight of activated carbon, initial capacity Z (F/g) per a unit weight of activated carbon, and specific surface area ($m^2$/g) per a unit weight of activated carbon.

$$(\text{Formula})\quad D=(W/S)\times(Z/S)\times10^6$$

Expansion Amount per Capacity (DEDMA/GBL)

*Fig. 1*

**Description**

FIELD OF INVENTION

The present disclosure relates to an electric double layer capacitor that includes a polarizable electrode for a positive electrode and a negative electrode.

BACKGROUND

An electric double layer capacitor is formed by housing an element which is a polarizable electrode impregnated with electrolytic solution in a container, and utilizes electricity storage action of the electric double layer formed at a boundary surface of the polarizable electrode and the electrolytic solution. The electric double layer capacitor is advantageous in having long lifetime for little deterioration of electrode active material due to repeated charging and discharging.

Typically, in the electric double layer capacitor, activated carbon is used for a polarizable electrode layer of the polarizable electrode, metal such as aluminum is used for a current collector formed on a surface of the polarizable electrode layer, and aprotic electrolytic solution is used for the electrolytic solution. Quaternary ammonium salt is mainly used for an electrolyte of the electrolytic solution. Typically, carbonate compounds such as propylene carbonate or lactone compounds such as γ-butyrolactone are used for a solvent of the electrolytic solution (for example, refer Patent Document 1).

The carbonate compound generates carbon dioxide and carbon monoxide gas by hydrolysis or electrolysis, which may increase internal pressure of the electric double layer capacitor. The lactone compound generates less amount of gas than the carbonate compound. However, hydrophilic functional groups such as carboxyl groups, hydroxyl groups, and quinone groups exist on an inner surface of the activated carbon, and said groups facilitate decomposition reaction of the lactone compound, generating gas. Therefore, even if the lactone compound is used as the solvent of the electrolytic solution, the gas generation cannot be sufficiently suppressed.

The increase in the internal pressure of the electric double layer capacitor may cause a safety valve, that is, may shorten the lifetime. Therefore, conventionally, there are attempts to install a gas absorption layer inside a casing of the electric double layer capacitor while using the lactone compound as the solvent (for example, refer Patent Document 2). Furthermore, conventionally, there are attempts to add control agents to decompose gas in the electrolytic solution and control agents to control intermediate products during gas generation process (for example, refer Patent Document 3).

PRIOR ART DOCUMENT

PATENT DOCUMENT

Patent Document 1: JP 2001-217150
Patent Document 2: JP 2007-73809
Patent Document 3: JP 2013-149781

SUMMARY OF INVENTION

PROBLEMS TO BE SOLVED BY INVENTION

If the gas absorption layer is provided inside the casing, accommodation space for the electrode and the electrolytic solution included inside the casing is reduced, which may reduce the capacity of the electric double layer capacitor. Furthermore, if the control agent to control the generation of gas is added in the electrolytic solution, since this control agent is impurity in viewpoint from achieving the capacity of the electric double layer capacitor, electric property of the electric double layer capacitor may be degraded.

Therefore, it is not preferable to provide the gas absorption layer or add the control agent. Thus, suitable solution has not yet been proposed for short lifetime of the electric double layer capacitor due to the generation of gas.

The present disclosure is proposed to address the above-described problem. The objective is to provide an electric double layer capacitor that can suppress the generation of gas and achieve long lifetime.

MEANS TO SOLVE THE PROBLEM

According to gas generation mechanism of an electric double layer capacitor using electrolytic solution using an aprotic solvent, it can be easily assumed that there is correlation between an amount of total acidic surface functional groups of activated carbon that is a polarizable electrode layer and an amount of generated gas. Therefore, the inventors minutely investigated the correlation between the amount of total acidic surface functional groups in the activated carbon and the amount of generated gas, but could not find clear correlation relation. However, the inventors defined a new index D (($meq/m^2 \times F/m^2) \times 10^6$), which takes initial capacity of the activated carbon into account, as the below formula in addition to the amount of the total acidic surface functional groups, studied the electric double layer capacitor having various values for the index D, and found that there is an extreme difference in the amount of generated gas between the index D value of less than 2.5 and more than 2.5.

(Formula)

$$D = (W/S) \times (Z/S) \times 10^6$$

W: amount of total acidic surface functional group per a unit weight of activated carbon (meq/g)
Z: initial capacity per a unit weight of activated carbon (F/g)
S: specific surface area per a unit weight of activated carbon ($m^2/g$)

That is, the inventors well studied and found that the amount of generated gas in the electric double layer capacitor can be suppressed by manipulating the amount W of the total acidic surface functional group per a unit weight of activated carbon (meq/g), the initial capacity Z per a unit weight of activated carbon (F/g), the specific surface area S per a unit weight of activated carbon ($m^2/g$), or combinations thereof to adjust the value of the index D to be 2.5 or less.
Therefore, to achieve the above objective, an electric double layer capacitor according to the present disclosure includes:

a positive electrode and a negative electrode having polarizable electrode layer including activated carbon with a surface functional group; and
electrolytic solution containing an aprotic solvent and quaternary ammonium salt,
in which a value of an index D (($meq/m^2 \times F/m^2) \times 10^6$) calculated by the above formula is 2.5 or less.

The aprotic solvent may be lactone compound or carbonate compound.
The aprotic solvent may be $\gamma$-butyrolactone.
The carbonate compound may be propylene carbonate.
The quaternary ammonium may be diethykmethylammonium salt, methylethylpyrrolidinium salt, or triethylmethylammonium salt.

EFFECT OF INVENTION

According to the present disclosure, the amount of generated gas can be prevented while eliminating or reducing the gas absorption layer inside the casing or eliminating or reducing the control agent to control the generation of gas in the electrolytic solution. Thus, according to the present disclosure, the electric double layer capacitor with long lifetime can be achieved.

BRIEF DESCRIPTION OF DRAWINGS

Fig. 1 is a graph indicating a relation between an index D and an expansion amount per capacity when $\gamma$-butyrolactone is used as a solvent and DEDMA·BF$_4$ is used as an electrolyte.
Fig. 2 is a graph indicating a relation between an index D and an expansion amount per capacity when $\gamma$-butyrolactone is used as a solvent and MEPy·BF$_4$ is used as an electrolyte.
Fig. 3 is a graph indicating a relation between an index D and an expansion amount per capacity when propylene carbonate is used as a solvent and MEpy·BF$_4$ is used as an electrolyte.
Fig. 4 is a graph indicating a relation between an index D and an expansion amount per capacity when $\gamma$-butyrolactone is used as a solvent and TEMA·BF$_4$ is used as an electrolyte.

EMBODIMENTS

(Overall Configuration)

An electric double layer capacitor according to embodiments of the present disclosure utilizes electricity storage action of an electric double layer formed at a boundary surface of a polarizable electrode and electrolytic solution.

A polarizable electrode is mainly formed by a current collector and a polarizable electrode layer. The polarizable electrode layer mainly includes activated carbon. The activated carbon has a number of pores, and a hydrophilic acidic surface functional group exists on an inner surface of the pore. The hydrophilic acidic surface functional group is a carboxyl group, a hydroxyl groups, and a quinone groups, etc. An aprotic solvent is used as a solvent of the electrolytic solution. The aprotic solvent is lactone compound and carbonate compound. The lactone compound is $\gamma$-butyrolactone or $\gamma$-valerolactone, etc. The carbonate compound is propylene carbonate and ethylene carbonate, etc. Quaternary ammonium salt is included as an electrolyte of the electrolytic solution.

An index D (($meq/m^2 \times F/m^2) \times 10^6$) is defined as the below Formula 1. At this time, the electric double layer capacitor satisfies a condition that a value of the index D is 2.5 or less.

$$(Formula\ 1)$$

$$D=(W/S) \times (Z/S) \times 10^6 \cdot \cdot \cdot Formula\ 1$$

W: total acidic surface functional group per a unit weight of activated carbon (meq/g)
Z: initial capacity per a unit weight of activated carbon (F/g)
S: specific surface area per a unit weight of activated carbon ($m^2/g$)

According to the relation between the index D represented by Formula 1 and the amount of generated gas in the electric double layer capacitor, there is an extreme difference in the amount of generated gas between the index D value of less than 2.05 and more than 2.5. The amount of generated gas is significantly suppressed in the electric double layer capacitor with the index D of 2.5 or less compared to that of the electric double layer capacitor with the index D of 2.5 or more.

Although it is an assumption and not limited thereto, the reason for such regularity between the index D and the amount of generated gas is as follows.

In Formula 1, (Z/S) is the initial capacity ($F/m^2$) per a specific surface area of the activated carbon, and should be correlated to ratio of the specific surface area of the activated carbon to which solvation ions enter, adsorb, and achieve the capacity, not the total specific surface area of the activated carbon. Accordingly, the index D to which multiplication of (Z/S) is incorporated is correlated to the amount of the surface functional groups at a place where the solvation ions enter and contribute to the capacity, among the acidic surface functional groups of the total specific surface area of the activated carbon. In other words, the acidic surface functional groups at a place where the solvation ions cannot enter are eliminated from the index D.

Therefore, gas is generated when the aprotic solvent including the solation ions as the component and the acidic surface functional groups, and when the acidic surface functional groups exist on the surface of the activated carbon into which the solvation ions can enter. That is, the amount of generated gas is related to the amount of the acidic surface functional groups present on the surface of the activated carbon into which the solvation ions can enter. Therefore, it is considered that there is regularity between the index D and the amount of generated gas. That is, the index D is related to the amount of the surface functional groups at a place where the solvation ions enter and contribute to the capacity, among the acidic surface functional groups of the total specific surface area of the activated carbon.

The electric double layer capacitor with the index D of 2.5 or less may be produced by manipulating one or more of the amount W of the total acidic surface functional group (meq/g), the initial capacity Z (F/g), and the specific surface area S of the activated carbon ($m^2/g$) according to the above Formula 1. Otherwise, the initial capacity F (F/g) may be changed by cation species, anion species, solvent species, a composition ratio, and concentration, etc., to adjust the index D.

Note that the amount W of the total acidic surface functional group (meq/g) is quantified according to Boehm method (Literature "H.P.Boehm, Adzan. Catal, 16,179(1966)") when calculating the index D. Furthermore, the specific surface area ($m^2/g$) is quantified according to the BET method when calculating the index D

When calculating the index D, the initial capacity Z (F/g) is obtained by measuring initial capacity Y (F) expressed at the polarizable electrode of the electric double layer capacitor, measuring weight X (g) of the activated carbon included in the polarizable electrode layer of the polarizable electrode, and dividing the measured initial capacity from the weight (Y/X).

The initial capacity Y (F) is measured according to constant current discharge method for the unused electric double layer capacitor shipped after the performance inspection, etc. That is, the electric double layer capacitor is charged at the constant current I, then is kept in voltage for certain time, and is discharged at the constant current I. At the time of discharging, time T spent for the voltage to fall from measurement start voltage V1 excluding IR drop to measurement end voltage V2 is measured. Then, the capacity (F) is calculated from a product of the constant current I and the time T, and a difference (V) between the measurement start voltage V1 and the measurement end voltage V2.

The weight X of the activated carbon is calculated by obtaining weight of the polarizable electrode layer and multiplying therewith weight ratio of the activated carbon among all material included in the polarizable electrode. For example, the weight X is obtained by X = a × b × c, in which volume a (cc) of the polarizable electrode layer, density b (g/cc) of the polarizable electrode layer, and the weight ratio c (c) of the activated carbon in the slurry are multiplied. The weight ratio of the activated carbon in the slurry is weight ratio of the activated carbon excluding a volatilized solvent among all components included in the slurry produced during a process of forming the polarizable electrode layer.

(Detailed Configuration)

(Polarizable Electrode)

In the electric double layer capacitor, metal such as aluminum, platinum, gold, nickel, titanium, and steel is used as the current collector of the polarizable electrode. A shape of the current collector may be any shape such as a film-shape, a foil-shape, and a plate-shape. Furthermore, a surface of the current collector may be uneven surface such as by etching, or may be plain surface.

A carbon coating layer may be formed on the surface of the current collector to improve conductivity between the current collector and the polarizable electrode layer. The carbon coating layer is mainly formed of carbon material with conductivity and is formed by applying and drying the slurry including a binder, etc. The carbon material may be carbon black such as Ketjen black, acetylene black, and channel black, carbon nanohorn, amorphous carbon, natural graphite, artificial graphite, and graphitized Ketjen black, etc.

Furthermore, phosphorus may be adhered on the surface of the current collector to suppress hydration and oxidation of the current collector. For example, the current collector is immersed in aqueous solution of phosphoric acid or phosphate. When forming both the carbon coating layer and phosphorus on the current collector, phosphorus is formed on the surface of the current collector, and the carbon coating layer is formed thereon.

The polarizable electrode layer may be formed on the surface of the current collector or on an outermost surface of the current collector covered by the laminated phosphorus, the carbon coating layer, or the both. Source material for the activated carbon mainly included in the polarizable electrode layer may be natural plant tissues such as coconut hemps, synthetic resin such as phenols, fossil-fuel based material such as coal, coke, and pitch, and activation treatment such as steam activation, alkaline activation, zinc chloride activation, or electric field activation, and opening treatment may be performed.

A conductive agent may be included in the polarizable electrode layer. The conductive agent may be Ketjen black, acetylene black, natural/artificial graphite, and fibrous carbon, and the fibrous carbon may be carbon nanotube and carbon nanofiber, etc. The carbon nanotube may be single-walled carbon nanotube(SWCNTs) with a single layer of a graphene sheet, or multi-walled carbon nanotube (MWCNTs) in which two or more layers of graphene sheets are curled up on a same axis and a tube wall forms multiple layers, or mixtures thereof.

For example, the polarizable electrode layer of the polarizable electrode may be formed by applying the slurry of the activated carbon, the conductive agent, and the binder on the current collector by doctor blading, etc., and drying the slurry. For example, the binder may be rubber such as fluorine-based rubber, diene-based rubber, and styrene-based rubber, fluorine-containing polymers such as polytetrafluoroethylene and polyvinylidene difluoride, cellulose such as carboxymethyl cellulose and nitrocellulose, and others such as polyolefin resin, polyimide resin, acryl resin, nitrile resin, polyester resin, phenol resin, polyvinyl acetate resin, polyvinyl alcohol resin, and epoxy resin. The binder may be used in single or in combination of two or more.

The aprotic solvent selected for the solvent of the electrolytic solution may be lactone compounds such as $\gamma$-butyrolactone or $\gamma$-valerolactone, and carbonate compounds such as propylene carbonate or ethylene carbonate. In addition to the lactone compounds and the carbonate compounds, other kinds of solvents may be combined for the solvents. Other solvents may be cyclic carbonate esters, chain carbonate esters, phosphoric acid esters, cyclic ethers, chain ethers, chain esters, nitrile compounds, amide compounds, and sulfone compounds such as sulfolane.

For the quaternary ammonium salt selected for the electrolyte of the electrolytic solution, cations may be tetramethylammonium, ethyltrimethylammonium, tetraethylammonium, triethylmethylammonium, diethyldimethylammonium, methylethylpyrrolidinium, spirobipyrrolidinium, and anions may be $BF_4^-$, $PF_6^-$, $ClO_4^-$, $AsF_6^-$, $SbF_6^-$, $AlCl_4^-$, or $RfSO_3^-$, $(RfSO_2)_2N^-$, and $RfCO_2^-$ (Rf is a fluoroalkyl group with 1 to 8 carbon).

Typically, the quaternary ammonium salt may be tetramethylammonium$BF_4$, ethyltrimethylammonium$BF_4$, diethyldimethylammonium$BF_4$, triethylmethylammonium$BF_4$, tetraethylammonium$BF_4$, spirobipyrrolidinium$BF_4$,

methylethylpyrrolidinium$BF_4$, tetramethylammonium$PF_6$, ethyltrimethylammonium$PF_6$, diethyldimethylammonium$PF_6$, triethylmethylammonium$PF_6$, tetraethylammonium$PF_6$, spirobipyrrolidinium$PF_6$, methylethylpyrrolidinium$PF_6$, tetramethylammonium bis(oxalate)borate, ethyltrimethylammonium bis(oxalate)borate, diethyldimethylammonium bis(oxalate)borate, triethylmethylammonium bis(oxalate)borate, tetraethylammonium bis(oxalate)borate, spirobipyrrolidinium bis(oxalate)borate, methylethylpyrrolidinium bis(oxalate)borate,tetramethylammonium difluorooxalateborate, ethyltrimethylammonium difluorooxalateborate, diethyldimethylammoniumdifluorooxalateborate, triethylmethylammonium difluorooxalateborate, tetraethylammonium difluorooxalateborate, spirobipyrrolidinium difluorooxalateborate, and methylethylpyrrolidinium difluorooxalateborate.

(Other Detailed Configuration)

An element in which the separator is intervened between a pair of the polarizable electrodes is produced, a lead terminal is attached to the element, the element is impregnated with the electrolytic solution, the element is housed inside an outer casing, and the outer casing is sealed by a sealing body, to produce the electric double layer capacitor.

The separator holds the electrolytic solution and prevents short-circuit of the positive electrode and the negative electrode, and cellulose-based separators, synthetic resin non-woven separators, mixed paper produced by papermixing cellulose and synthetic resin, and porous film may be used. The cellulose may be kraft, Manila hemp, esparto, hemp, and rayon. Non-woven fabric may be polyester, polyphenylene sulfide, polyethylene terephthalate, polybutylene terephthalate, polyamide, polyimide, fluorine-based resin, polyolefin-based resin such as polypropylene and polyethylene, fiber such as ceramics and glass.

For example, the outer casing is formed of aluminum alloy containing aluminum and manganese or stainless steel, and has a bottom at one end. The lead terminal is connected to the element by stitching, cold-welding, ultrasonic welding, and laser welding, etc., and penetrates the sealing body so that the electric double layer capacitor protrudes to the outside. For example, the sealing body is rubber or a laminate of rubber and a rigid substrate, and is fit into the outer casing inside which the element is housed. Note that, although an example of the cylindrical electric double layer capacitor is described, the shape of the electric double layer capacitor is no limited and may be coin-shape, film-shape, cylinder-shape, or box-shape.

The present disclosure will be described in more detail based on examples. Note that the present disclosure is not limited to the following examples. As described below, electric double layer capacitors of each example and comparative example including polarizable electrode for the positive electrode and the negative electrode is produced by combining each type of polarizable electrodes and electrolytic solution.

Firstly, steam-activated activated carbon, carbon black, carboxymethylcellulose as a dispersant, SBR as a binder, and pure water were mixed to obtain a slurry. The produced slurry was applied and dried on both surface of the produced current collector to produce a coated electrode.

Note that the current collector was produced by immersing the etched aluminum foil to phosphoric acid aqueous solution to adhere phosphorus on the surface thereof, and applying coating material including graphite on the surface of the foil to form the carbon coating layer on both surface of the aluminum foil.

The coated electrode was cut into a predetermined size to produce polarizable electrode at the positive electrode and the negative electrode. Then, the rayon separator was sandwiched and laminated between the polarizable electrodes of the positive electrode and the negative electrode to produce a wound-type element with diameter of 16.5 mm and height of 43 mm. This element was impregnated with the electrolytic solution and was inserted into the aluminum outer casing that is A1070 defined in JIS H 4000:2006, and the outer casing was sealed by the sealing body, to produce each electric double layer capacitors. The outer casing had a dimensional size of 18 mm in diameter, 50 mm in height , and 0.45 mm in thickness.

The below table 1 shows the specific surface area and the amount of total acidic surface functional groups of each steam-activated activated carbon used in the produced electric double layer capacitor.

[Table 1]

|  | Activated Carbon 1 | Activated Carbon 2 | Activated Carbon 3 | Activated Carbon 4 | Activated Carbon 5 |
|---|---|---|---|---|---|
| Specific Surface Area S ($m^2$/g) | 2245 | 1724 | 1772 | 1703 | 1697 |
| Amount of Total Surface Functional Group per Unit Weight of Activated Carbon (meq/g) | 0.392 | 0.231 | 0.259 | 0.251 | 0.361 |

The below table 2 shows the specific surface area and the amount of total acidic surface functional groups of each steam-activated activated carbon used in the produced electric double layer capacitor.

[Table 2]

| | Solvent | Electrolyte |
|---|---|---|
| Electrolytic Solution 1 | GBL | 1.5M DEDMA · BF$_4$ |
| Electrolytic Solution 2 | | 1.5M MEPy · BF$_4$ |
| Electrolytic Solution 3 | PC | 1.5M MEPy · BF$_4$ |
| Electrolytic Solution 4 | GBL | 1.5M TEMA · BF$_4$ |

In table 2, GBL indicates γ-butyrolactone, PC indicates propylene carbonate, DEDMA · BF$_4$ indicates diethyldimethyl-ammonium tatrafluoroborate, MEPy · BF$_4$ indicates methylethylpyrrolidinium tatrafluoroborate, TEMA·BF$_4$ indicates tetra-ethylammonium tetrafluoroborate. 1.5 M or 1.0 M indicates a number of moles (mol/L) of the electrolyte relative to 1L of the electrolytic solution.

[Examples 1 to 12 and Comparative Examples 1 to 8]

Combinations of the activated carbon and the electrolytic solution in the electric double layer capacitor of the examples 1 to 12 and the comparative examples 1 to 8 are indicated in the below tables 3 to 5. As shown in the below tables 3 to 5, the solvent of the electrolytic solution was γ-butyrolactone in the examples 1 to 6 and the comparative examples 1 to 4, the solvent of the electrolytic solution was propylene carbonate in the examples 7 to 9 and the comparative examples 5 and 6, and the solvent of the electrolytic solution was γ-butyrolactone in the examples 10 to 12 and the comparative examples 7 and 8.

[Table 3]

| | | Activated Carbon | Electrolytic Solution | Initial Capacity Y (F) | Weight X of Activated Carbon in Product (g) | Capacity Z Z=Y/X |
|---|---|---|---|---|---|---|
| | Example 1 | Activated Carbon 1 | Electrolytic Solution 1 | 52.14 | 1.73 | 30.14 |
| | Example 2 | Activated Carbon 1 | Electrolytic Solution 2 | 52.72 | 1.73 | 30.47 |
| | Example 3 | Activated Carbon 2 | Electrolytic Solution 1 | 63.05 | 2.11 | 29.88 |
| | Example 4 | Activated Carbon 2 | Electrolytic Solution 2 | 64.08 | 2.11 | 30.37 |
| | Example 5 | Activated Carbon 3 | Electrolytic Solution 1 | 63.48 | 2.29 | 27.72 |
| | Example 6 | Activated Carbon 3 | Electrolytic Solution 2 | 64.30 | 2.29 | 28.08 |
| | Comparative Example 1 | Activated Carbon 4 | Electrolytic Solution 1 | 61.33 | 2.05 | 29.92 |
| | Comparative Example 2 | Activated Carbon 4 | Electrolytic Solution 2 | 63.14 | 2.05 | 30.80 |
| | Comparative Example 3 | Activated Carbon 5 | Electrolytic Solution 1 | 63.12 | 2.16 | 29.22 |
| | Comparative Example 4 | Activated Carbon 5 | Electrolytic Solution 2 | 63.96 | 2.16 | 29.61 |

[Table 4]

|  | Activated Carbon | Electrolytic Solution | Initial Capacity Y (F) | Weight X of Activated Carbon in Product (g) | Capacity Z Z=Y/X |
|---|---|---|---|---|---|
| Example 7 | Activated Carbon 1 | Electrolytic Solution 3 | 54.26 | 1.73 | 31.36 |
| Example 8 | Activated Carbon 2 | Electrolytic Solution 3 | 65.68 | 2.11 | 31.13 |
| Example 9 | Activated Carbon 3 | Electrolytic Solution 3 | 65.84 | 2.29 | 28.75 |
| Comparative Example 5 | Activated Carbon 4 | Electrolytic Solution 3 | 64.02 | 2.05 | 31.23 |
| Comparative Example 6 | Activated Carbon 5 | Electrolytic Solution 3 | 65.46 | 2.16 | 30.31 |

[Table 5]

|  | Activated Carbon | Electrolytic Solution | Initial Capacity Y (F) | Weight X of Activated Carbon in Product (g) | Capacity Z Z=Y/X |
|---|---|---|---|---|---|
| Example 10 | Activated Carbon 1 | Electrolytic Solution 4 | 53.64 | 1.73 | 31.01 |
| Example 11 | Activated Carbon 2 | Electrolytic Solution 4 | 63.12 | 2.11 | 29.91 |
| Example 12 | Activated Carbon 3 | Electrolytic Solution 4 | 63.96 | 2.29 | 27.93 |
| Comparative Example 7 | Activated Carbon 4 | Electrolytic Solution 4 | 60.82 | 2.05 | 29.67 |
| Comparative Example 8 | Activated Carbon 5 | Electrolytic Solution 4 | 62.46 | 2.16 | 28.92 |

The weight X of the activated carbon 1 to 5 in the above tables 3 to 5 were obtained by multiplying volume (cc) of the polarizable electrode layer, density (g/cc) of the polarizable electrode layer, and the weight ratio (c) of the activated carbon in the slurry. The weight ratio (c) of the activated carbon in the slurry is weight ratio of the steam-activated activated carbon relative to the total weight of the steam-activated activated carbon, carbon black, carboxymethylcellulose, and SBR included in the slurry, that is, the total weight excluding pure water.

As shown in the above tables 3 to 5, initial capacity Y (F) of the electric double layer capacitor of the examples 1 to 12 and the comparative examples 1 to 8 was measured, capacity Z (Y/X) per weight of the activated carbon based on the initial capacity Y (F) and the weight X was calculated, and the initial capacity Y and the capacity Z were described in the above tables 3 to 5.

Note that, for the initial capacity (F) of the electric double layer capacitor of the examples 1 to 12 and the comparative examples 1 to 8 shown in the above tables 3 to 5, the electric double layer capacitor was charged by applying voltage of 2.5 V for 20 minutes under temperature environment of 20 degrees. Constant current discharging was performed immediately after the charging had completed, and at the time of discharging, measurement start voltage at predetermined time T was voltage after IR drop, and measurement end voltage was 1.25 V.

Indexes D for the electric double layer capacitor of the examples 1 to 6 and the comparative Examples 1 to 4 in which the solvent of the electrolytic solution was γ-butyrolactone were calculated based on the above tables 1 to 3, and the result is in the below table 6.

[Table 6]

|  | Index D<br>$(meq/m^2 \times F/m^2) \times 10^6$<br>$D=(W/S) \times (Z/S) \times 10^6$ |
|---|---|
| **Example 1** | **2.34** |
| **Example 2** | **2.37** |
| **Example 3** | **2.32** |
| **Example 4** | **2.36** |
| **Example 5** | **2.29** |
| **Example 6** | **2.32** |
| **Comparative Example 1** | **2.59** |
| **Comparative Example 2** | **2.67** |
| **Comparative Example 3** | **3.66** |
| **Comparative Example 4** | **3.71** |

The indexes D for the electric double layer capacitor of the examples 7 to 9 and the comparative Examples 5 and 6 in which the solvent of the electrolytic solution was propylene carbonate were calculated based on the above tables 1, 2, and 4, and the result is in the below table 7.

[Table 7]

|  | Index D<br>$(meq/m^2 \times F/m^2) \times 10^6$<br>$D=(W/S) \times (Z/S) \times 10^6$ |
|---|---|
| **Example 7** | **2.44** |
| **Example 8** | **2.42** |
| **Example 9** | **2.37** |
| **Comparative Example 5** | **2.70** |
| **Comparative Example 6** | **3.80** |

The indexes D for the electric double layer capacitor of the examples 10 to 12 and the comparative examples 7 and 8 in which the solvent of the electrolytic solution was $\gamma$-butyrolactone were calculated based on the above tables 1, 2 and 5, and the result is in the below table 8.

[Table 8]

|  | Index D<br>$(meq/m^2 \times F/m^2) \times 10^6$<br>$D=(W/S) \times (Z/S) \times 10^6$ |
|---|---|
| **Example 10** | **2.41** |
| **Example 11** | **2.32** |
| **Example 12** | **2.30** |
| **Comparative Example 7** | **2.57** |
| **Comparative Example 8** | **3.63** |

(Measurement of Amount of Generated Gas)

Expansion amount of the outer casing due to the generation of gas was measured for the examples 1 to 12 and Comparative Examples 1 to 8. At the time of measurement, an opening of the outer casing closed by the sealing body was completely covered by resin, including the sealing body, so that the generated gas does not escape from the electric double layer capacitor. The resin covered a rubber portion of the sealing body with hardness and thickness that had not deformed by load test.

Then, the load test of applying constant voltage of 2.5 V for 300 hours under temperature environment of 70 degrees was performed to the electric double layer capacitor covered by the resin. Then, the maximum length of the casing before and after the load test was measured and the expansion amount was obtained. Furthermore, the measurement result of the expansion amount was divided by the initial capacity Y to obtain the expansion amount per capacity.

The expansion amount obtained from the load test for the electric double layer capacitors of the examples 1 to 6 and the comparative examples 1 to 4 in which the solvent of the electrolytic solution was $\gamma$-butyrolactone is shown in the below table 9.

[Table 9]

| | Index D (meq/m²×F/m²) ×10⁶ D=(W/S)×(Z/S) ×10⁶ | Initial Capacity Y (F) | Expansion Amount (mm) | Expansion Amount per Capacity (mm/F) |
|---|---|---|---|---|
| Example 1 | 2.34 | 52.14 | 0.1028 | 0.00197 |
| Example 2 | 2.37 | 52.72 | 0.109 | 0.00207 |
| Example 3 | 2.32 | 63.05 | 0.12125 | 0.00192 |
| Example 4 | 2.36 | 64.08 | 0.1838 | 0.00287 |
| Example 5 | 2.28 | 63.48 | 0.098 | 0.00154 |
| Example 6 | 2.31 | 64.30 | 0.042 | 0.00065 |
| Comparative Example 1 | 2.59 | 61.33 | 0.43475 | 0.00709 |
| Comparative Example 2 | 2.67 | 63.14 | 0.6952 | 0.01101 |
| Comparative Example 3 | 3.66 | 63.12 | 0.5682 | 0.00900 |
| Comparative Example 4 | 3.71 | 63.96 | 0.7784 | 0.01217 |

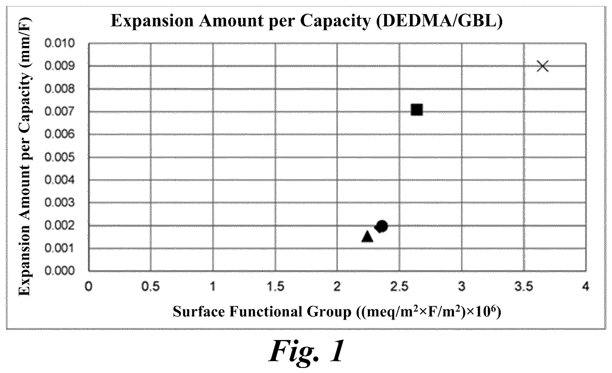

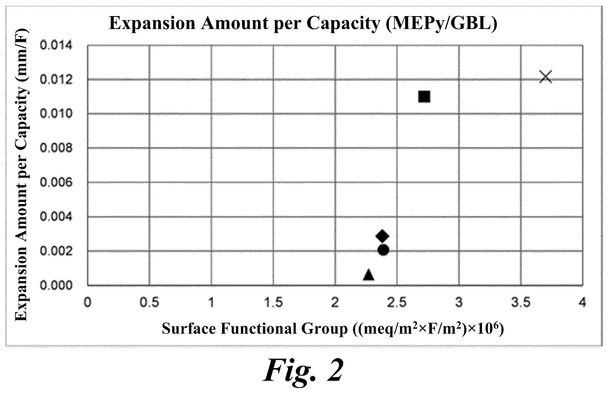

Furthermore, graphs in which the horizontal axis expresses the index D and the vertical axis expresses the expansion amount per capacity is shown in Figs. 1 and 2 based on the table 9. Figs. 1 and 2 are plotted for each electrolyte. Fig. 1 is a series using electrolytic solution 1 in which the solvent is $\gamma$-butyrolactone and the electrolyte is DEDMA·BF$_4$, and is a graph in which results of the examples 1, 3, and 5, and the comparative examples 1 and 3 are plotted. In Fig. 1, a circle indicates the example 1, a rhombus indicates the example 3, a triangle indicates the example 5, a square indicates the comparative example 1, and x indicates the comparative example 3. Fig. 2 is a series using electrolytic solution 2 in which the solvent is $\gamma$-butyrolactone and the electrolyte is MEPy· BF$_4$, and is a graph in which results of the examples 2, 4, and 6, and the comparative examples 2 and 4 are plotted. In Fig. 2, a circle indicates the example 2, a rhombus indicates the example 4, a triangle indicates the example 6, a square indicates the comparative example 2, and x indicates the comparative example 4.

The expansion amount of the casing obtained from the load test for the electric double layer capacitors of the examples 7 to 9 and the comparative examples 5 and 6 in which the solvent of the electrolytic solution was propylene carbonate is shown in the below table 10.

[Table 10]

| | Index D $(meq/m^2 \times F/m^2)$ $\times 10^6$ $D=(W/S) \times (Z/S)$ $\times 10^6$ | Initial Capacity Y (F) | Expansion Amount (mm) | Expansion Amount per Capacity (mm/F) |
|---|---|---|---|---|
| Example 7 | 2.44 | 54.26 | 0.1518 | 0.00280 |
| Example 8 | 2.42 | 65.68 | 0.2830 | 0.00431 |
| Example 9 | 2.37 | 65.84 | 0.1308 | 0.00199 |
| Comparative Example 5 | 2.70 | 64.02 | 0.07078 | 0.01106 |
| Comparative Example 6 | 3.80 | 65.46 | 0.8110 | 0.01239 |

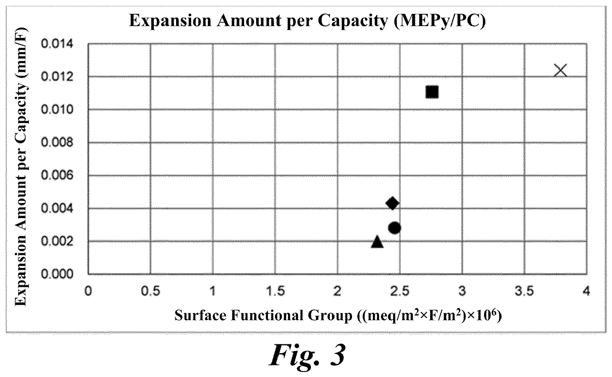

Furthermore, graphs in which the horizontal axis expresses the index D and the vertical axis expresses the expansion amount per capacity is shown in Fig. 3 based on the table 10. Fig. 3 is a series using electrolytic solution 3 in which the solvent is propylene carbonate and the electrolyte is MEPy·BF$_4$, and is a graph in which results of the examples 7 to 9 and the comparative examples 5 and 6 are plotted. In Fig. 3, a circle indicates the example 7, a rhombus indicates the example 8, a triangle indicates the example 9, a square indicates the comparative example 5, and x indicates the comparative example 6.

The expansion amount of the casing obtained from the load test for the electric double layer capacitors of the examples 10 to 12 and the comparative examples 7 and 8 in which the solvent of the electrolytic solution was γ-butyrolactone is shown in the below table 11.

[Table 11]

| | Index D $(meq/m^2 \times F/m^2)$ $\times 10^6$ $D=(W/S) \times (Z/S)$ $\times 10^6$ | Initial Capacity Y (F) | Expansion Amount (mm) | Expansion Amount per Capacity (mm/F) |
|---|---|---|---|---|
| Example 10 | 2.41 | 53.64 | 0.0618 | 0.00115 |
| Example 11 | 2.32 | 63.12 | 0.0646 | 0.00102 |
| Example 12 | 2.30 | 63.96 | 0.0094 | 0.00015 |
| Comparative Example 7 | 2.57 | 60.82 | 0.2464 | 0.00390 |
| Comparative Example 8 | 3.62 | 62.46 | 0.3472 | 0.00556 |

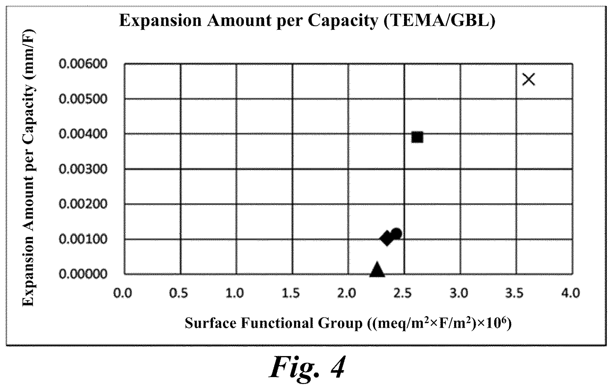

Furthermore, graphs in which the horizontal axis expresses the index D and the vertical axis expresses the expansion amount per capacity is shown in Fig. 4 based on the table 11. Fig. 4 is a series using electrolytic solution 4 in which the solvent is γ-butyrolactone and the electrolyte is TEMA·BF$_4$, and is a graph in which results of the examples 10 to 12 and the comparative examples 7 and 8 are plotted. In Fig. 4, a circle indicates the example 10, a rhombus indicates the example 11, a triangle indicates the example 12, a square indicates the comparative example 7, and x indicates the comparative example 8.

In the electric double layer capacitor of the examples 1 to 6 and the comparative examples 1 to 4, γ-butyrolactone was used as the solvent of the electrolytic solution. In this case, as shown in the table 9 and Figs. 1 and 2, the expansion amount per capacity of the electric double layer capacitors of the examples 1 to 6 in which the index D was 2.5 or less was 0.00287 mm/F or less. In contrast, the expansion amount per capacity of the electric double layer capacitors of the comparative examples 1 to 4 in which the index D was more than 2,5 exceeded 0.00709 mm/F. That is, even when comparing the maximum expansion amount in the examples 1 to 6 and the minimum expansion amount in the comparative examples 1 to 4, the expansion amount per capacity of the electric double layer capacitors of the examples 1 to 6 in which the index D was 2.5 or less was suppressed to about 40 % of the expansion amount per capacity of the electric double layer capacitors of the comparative examples 1 to 4 in which the index D was more than 2.5. Accordingly, it was observed that the expansion amount of the outer casing, that is, the amount of generated gas is significantly suppressed in the electric double layer capacitor with the index D of 2.5 or less.

In the electric double layer capacitor of the examples 7 to 9 and the comparative examples 5 and 6, propylene carbonate was used as the solvent. In this case, as shown in the table 10 and Fig. 3, the expansion amount per capacity of the electric double layer capacitors of the examples 7 to 9 in which the index D was 2.5 or less was 0.00431 mm/F or less. In contrast, the expansion amount per capacity of the electric double layer capacitors of the comparative examples 5 and 6 in which the index D was more than 2,5 exceeded 0.01106 mm/F. That is, even when comparing the maximum expansion amount in the examples 7 to 9 and the minimum expansion amount in the comparative examples 5 and 6, the expansion amount per capacity of the electric double layer capacitors of the examples 7 to 9 in which the index D was 2.5 or less was suppressed to about 40 % of the expansion amount per capacity of the electric double layer capacitors of the comparative examples 5 and 6 in which the index D was more than 2.5. Accordingly, it was observed that the expansion amount of the outer casing, that is, the amount of generated gas is significantly suppressed in the electric double layer capacitor with the index D of 2.5 or less.

In the electric double layer capacitor of the examples 10 to 12 and the comparative examples 7 and 8, $TEMA \cdot BF_4$ was used as the electrolyte. In this case, as shown in the table 11 and Fig. 4, the expansion amount per capacity of the electric double layer capacitor of the comparative examples 7 and 8 could be suppressed low, and the expansion amount per capacity of the electric double layer capacitor of the examples 10 to 12 was suppressed more than the expansion amount per capacity of the electric double layer capacitor of the comparative examples 7 and 8. That is, the expansion amount per capacity of the electric double layer capacitors of the examples 10 to 12 in which the index D was 2.5 or less was 0.00115 mm/F or less. In contrast, the expansion amount per capacity of the electric double layer capacitors of the comparative examples 7 and 8 in which the index D was more than 2,5 exceeded 0.0039 mm/F. Even when comparing the maximum expansion amount in the examples 10 to 12 and the minimum expansion amount in the comparative examples 7 and 8, the expansion amount per capacity of the electric double layer capacitors of the examples 10 to 12 in which $TEMA \cdot BF_4$ was used as the electrolyte was suppressed to about 30 % of the expansion amount per capacity of the electric double layer capacitors of the comparative examples 7 and 8 in which the index D was more than 2.5.

Furthermore, the minimum initial capacity of the electric double layer capacitors of the examples 1 to 12 in which the index D was 2.5 or less was 52.14 F, the maximum initial capacity of the electric double layer capacitors of the comparative examples 1 to 8 in which the index D was more than 2.5 was 65.46 F, and when comparing this minimum value and the maximum value, the initial capacity of the electric double layer capacitors of the examples 1 to 12 in which the index D was 2.5 or less was about 80% of the initial capacity of the electric double layer capacitors of the comparative examples 1 to 8 in which the index D was more than 2.5.

In addition, the expansion amount of the electric double layer capacitor of the example 4 which had the largest initial capacity among the examples using the electrolyte with $\gamma$-butyrolactone as the solvent was about 20 % of the expansion amount in the comparative examples 4 in which the initial capacity was approximately the same to that of the example 4. Similarly, the expansion amount of the electric double layer capacitor of the example 9 which had the largest initial capacity among the examples using the electrolyte with propylene carbonate as the solvent was about 20 % of the expansion amount in the comparative examples 6 in which the initial capacity was approximately the same to that of the example 9. Accordingly, it was observed that the expansion amount of the outer casing, that is, the amount of generated gas is significantly suppressed in the electric double layer capacitor with the index D of 2.5 or less, while maintaining excellent initial capacity.

Note that the electric double layer capacitors of the examples 1 to 6 were each different in whether the type of the electrolyte was $DEDMA \cdot BF_4$ shown in Fig. 1 or $MEPy \cdot BF_4$ shown in Fig, 2. However, as can be seen from the comparison between Figs. 1 and 2, the amount of generated gas in the electric double layer capacitor in which the index D was 2.5 or less was suppressed while maintaining excellent initial capacity regardless of the difference in the electrolyte.

Furthermore, the electric double layer capacitors of the examples 7 to 9 were each different from the electric double layer capacitors of the comparative examples 2, 4, and 6 in whether the type of the solvent was GBL shown in Figs. 1 and 2 or PC shown in Fig. 3. However, as can be seen when comparing Figs. 1 and 2, and Fig. 3, the expansion amount of the outer casing, that is, the amount of generated gas was significantly suppressed in the electric double layer capacitor with the index D of 2.5 or less, while maintaining excellent initial capacity.

The electric double layer capacitors of the examples 10 to 12 were each different from the electric double layer capacitors of the examples 1 to 9 in whether the type of the electrolyte was $TEMA \cdot BF_4$. By using $TEMA \cdot BF_4$, the amount of generated gas in the electric double layer capacitor with the index D of 2.5 or less was totally further suppressed, while maintaining excellent initial capacity.

Furthermore, it is not necessary to provide the gas absorption layer inside the casing like the conventional capacitor, so that accommodation space for the electrode and the electrolytic solution housed inside the casing is improved. Therefore, when using the outer casing with the same size, the element can be made larger than the conventional ones, so that the capacity per a volume of the electric double layer capacitor can be made larger.

**Claims**

1. An electric double layer capacitor, comprising:

   a positive electrode and a negative electrode having polarizable electrode layer including activated carbon with a surface functional group; and
   electrolytic solution including an aprotic solvent and quaternary ammonium salt,
   wherein a value of an index D (($meq/m^2 \times F/m^2) \times 10^6$) calculated by a below formula is 2.5 or less.

   $$(Formula) \quad D = (W/S) \times (Z/S) \times 10^6$$

   W: amount of total acidic surface functional group per a unit weight of activated carbon (meq/g)
   Z: initial capacity per a unit weight of activated carbon (F/g)
   S: specific surface area per a unit weight of activated carbon ($m^2/g$)

2. The electric double layer capacitor according to claim 1, wherein the aprotic solvent is lactone compound or carbonate compound.

3. The electric double layer capacitor according to claim 2, wherein the lactone compound is $\gamma$-butyrolactone.

4. The electric double layer capacitor according to claim 2, wherein the carbonate compound is propylene carbonate.

5. The electric double layer capacitor according to any one of claims 1 to 4, wherein the quaternary ammonium salt is diethykmethylammonium salt, methylethylpyrrolidinium salt, or triethylmethylammonium salt.

*Fig. 1*

*Fig. 2*

*Fig. 3*

Fig. 4

## INTERNATIONAL SEARCH REPORT

<table>
<tr><td colspan="2">International application No.</td></tr>
<tr><td colspan="2">**PCT/JP2021/030971**</td></tr>
</table>

### A.    CLASSIFICATION OF SUBJECT MATTER

**H01G 11/32**(2013.01)i; **H01G 11/60**(2013.01)i; **H01G 11/62**(2013.01)i
FI:    H01G11/32; H01G11/60; H01G11/62

According to International Patent Classification (IPC) or to both national classification and IPC

### B.    FIELDS SEARCHED

Minimum documentation searched (classification system followed by classification symbols)

H01G11/32; H01G11/60; H01G11/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | WO 2018/207769 A1 (KURARAY CO., LTD.) 15 November 2018 (2018-11-15) paragraphs [0056]-[0069], [0078], [0088]-[0097], tables 1, 2 | 1-5 |
| A | JP 2010-105836 A (JFE CHEMICAL CORP.) 13 May 2010 (2010-05-13) entire text, all drawings | 1-5 |
| A | JP 2017-208444 A (KURARAY CO., LTD.) 24 November 2017 (2017-11-24) entire text, all drawings | 1-5 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **12 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/030971**

| Patent document cited in search report | | | Publication date (day/month/year) | Patent family member(s) | Publication date (day/month/year) |
|---|---|---|---|---|---|
| WO | 2018/207769 | A1 | 15 November 2018 | US 2021/0050160 A1 paragraphs [0098]-[0129], [0138], [0147]-[0157], tables 1, 2 EP 3623344 A1 CN 110582464 A KR 10-2020-0006968 A | |
| JP | 2010-105836 | A | 13 May 2010 | (Family: none) | |
| JP | 2017-208444 | A | 24 November 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001217150 A
- JP 2007073809 A
- JP 2013149781 A

**Non-patent literature cited in the description**

- **H.P.BOEHM.** *Adzan. Catal,* 1966, vol. 16, 179